(19) Europäisches Patentamt
European Patent Office
Office européen des brevets

(11) **EP 4 151 553 A1**

(12) **EUROPEAN PATENT APPLICATION**
published in accordance with Art. 153(4) EPC

(43) Date of publication:
**22.03.2023 Bulletin 2023/12**

(21) Application number: **21803889.1**

(22) Date of filing: **10.05.2021**

(51) International Patent Classification (IPC):
*B65D 77/20* (2006.01)   *G09F 3/04* (2006.01)
*C08J 5/18* (2006.01)   *C08G 63/672* (2006.01)

(52) Cooperative Patent Classification (CPC):
**B65D 77/20; C08G 63/672; C08J 5/18; G09F 3/04**

(86) International application number:
**PCT/JP2021/017726**

(87) International publication number:
**WO 2021/230207 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.05.2020 JP 2020083679**

(71) Applicant: **TOYOBO CO., LTD.**
**Osaka-shi**
**Osaka 5300001 (JP)**

(72) Inventor: **HARUTA, Masayuki**
**Inuyama-shi, Aichi 484-8508 (JP)**

(74) Representative: **Vossius & Partner**
**Patentanwälte Rechtsanwälte mbB**
**Siebertstraße 3**
**81675 München (DE)**

(54) **COPOLYESTER RAW MATERIAL FOR FILMS, HEAT-SHRINKABLE POLYESTER FILMS, HEAT-SHRINKABLE LABELS, AND PACKAGES**

(57)    [Problem]
The present invention provides a raw material for polyester film with high stretchability and a heat-shrinkable polyester film which is produced by the raw material and capable of reducing troubles during processing such as printing and shrinking.
[Solution]
A copolymerized polyester raw material for film characterized by satisfying the following requirements (1) to (5): (1) the copolymerized polyester raw material comprises 5 mol% or more and 40 mol% or less of constituent unit derived from diethylene glycol in 100 mol% of total glycol component amount in whole polyester resin component; (2) the copolymerized polyester raw material comprises 0 mol% or more and 5 mol% or less of constituent unit derived from a monomer component which can become an amorphous component in whole polyester resin component; (3) the copolymerized polyester raw material has a glass transition temperature of 73°C or lower; (4) the copolymerized polyester raw material has an intrinsic viscosity of 0.60 dl/g or more and 0.85 dl/g or less; and (5) the copolymerized polyester raw material has a melt viscosity of 200 Pa·S or less in a measurement at 255°C and shear rate of 6080 /S.

EP 4 151 553 A1

**Description**

TECHNICAL FIELD

The present invention relates to a copolymerized polyester raw material for film with high stretchability and a heat-shrinkable polyester-based film, a heat-shrinkable label, and a package product using the same.

BACKGROUND ART

In recent years, heat-shrinkable polyester-based labels with high heat-resistance and solvent-resistance, and are easily incinerated produced by polyester-based heat-shrinkable films have been widely used in label packaging, cap sealing, or integrated packaging of glass bottles or PET bottles to protect them and display products' information. The use of the labels is increasing with an increase in the use of containers such as PET (polyethylene terephthalate) bottles.

After use, heat-shrinkable labels are discarded. Recently, the need to reduce the amount of garbage from an environmental standpoint has led to the use of heat-shrinkable labels with decreased thickness (i.e., thinner heat-shrinkable labels). Heat-shrinkable films with increased shrinkage ratio are highly demanded to cover a variety of containers, therefore, it has been increasing for the heat-shrinkable films to be formed from raw materials having increased amorphous content.

Production of the heat-shrinkable films with high shrinkage ratio for covering a variety of containers requires high stretching ratio in the shrinkage direction. However, such a high stretching ratio with reduced film thickness for environmental reasons has a disadvantage in film breakage, resulting in production stoppages due to tear of film during production.

PTL 1 discloses the production of heat-shrinkable film with the addition of polybutylene terephthalate or polypropylene terephthalate, which has lower glass transition temperature (hereinafter, merely Tg in some cases) than PET and can decrease stretching stress, allowing the film to have improved stretchability. However, polybutylene terephthalate and polypropylene terephthalate have different bulk density from PET raw materials, leading to the segregation of the raw materials on the way to an extruder after mixing the raw materials. This segregation of the raw materials causes fluctuation in raw material blend ratio in the longitudinal direction of the film, resulting in difference in physical properties in the longitudinal direction of the film.

PTL 2 discloses the apparatus related to feeding method of raw materials, by which two or more kinds of raw materials having different bulk density and angle of repose are fed without segregation for an extrusion process. Thus, produced film has small difference in physical properties in the longitudinal direction of the film, though such an apparatus undesirably requires plant and equipment investments.

CITATION LIST

PATENT LITERATURE

PTL1: JP-B2-4552097
PTL2: JP-B2-6544492

SUMMARY OF THE INVENTION

PROBLEMS TO BE SOLVED BY THE INVENTION

It is an object of the present invention to provide a raw material for polyester film with high stretchability. It is also an object to provide a heat-shrinkable polyester film which is produced from the raw material and capable of reducing troubles during processing such as printing and shrinking.

SOLUTION TO THE PROBLEMS

The present invention that solves the above problem has the following features.

1. A copolymerized polyester raw material for film characterized by satisfying the following requirements (1) to (5):

(1) the copolymerized polyester raw material comprises 5 mol% or more and 40 mol% or less of constituent unit derived from diethylene glycol in 100 mol% of total glycol component amount in whole polyester resin component;

(2) the copolymerized polyester raw material comprises 0 mol% or more and 5 mol% or less of constituent unit derived from a monomer component which can become an amorphous component in whole polyester resin component;

(3) the copolymerized polyester raw material has a glass transition temperature of 73°C or lower;

(4) the copolymerized polyester raw material has an intrinsic viscosity of 0.60 dl/g or more and 0.85 dl/g or less; and

(5) the copolymerized polyester raw material has a melt viscosity of 200 Pa·S or less in a measurement at 255°C and shear rate of 6080 /S.

2. The copolymerized polyester raw material for film according the above 1, wherein the copolymerized polyester raw material comprises an acid component consisting of terephthalic acid and a glycol component consisting of ethylene glycol and diethylene glycol in the whole polyester resin component.

3. A heat-shrinkable polyester film comprising the copolymerized polyester raw material according to the above 1 or 2, wherein the film satisfies the following requirements (6) to (10):

(6) the film has a hot-water heat shrinkage ratio in a main-shrinking direction of the film of 40% or more and 85% or less by immersion in hot water of 98°C for 10 seconds;

(7) the film has a hot-water heat shrinkage ratio in a direction orthogonal to the main-shrinking direction of the film of -5% or more and 15% or less by immersion in hot water of 98°C for 10 seconds;

(8) the film has a hot-water heat shrinkage ratio in a direction orthogonal to the main-shrinking direction of the film of -5% or more and 5% or less by immersion in hot water of 70°C for 10 seconds;

(9) the film has an intrinsic viscosity of 0.57 dl/g or more and 0.82 dl/g or less; and

(10) the film has an average defects number of 1.1 or less per a film of 100 $m^2$ with a defect size of 1 mm or more in a longitudinal direction of the film or a width direction of the film.

4. A heat-shrinkable label, comprising the heat-shrinkable polyester film according to the above 3.

5. A package product, characterized in that the package product is produced by covering at least a part of periphery of an object for packaging with the heat-shrinkable label according to the above 4, and followed by subjecting to a heat-shrinking treatment.

ADVANTAGEOUS EFFECTS OF THE INVENTION

The polyester film produced by the copolymerized polyester raw materials of the present invention has high stretchability and can be stretched at high stretching ratio, leading to excellent productivity. In addition, the heat-shrinkable film using the copolymerized polyester raw materials of the present invention has a small difference in shrinkage ratio in the longitudinal direction of the film, and has fewer foreign substances. These characteristics of the film can reduce troubles in processing such as printing and shrinking.

A non-shrinking direction of the films that heat-shrink in a width direction corresponds to a longitudinal direction of the films. Since tension is applied to films in the longitudinal direction during printing or processing, films are required to have specified tensile elongation at break in the longitudinal direction of the film for excellent processability of films. Heat-shrinkable polyester-based film produced from the copolymerized polyester raw material of the present invention has a tensile elongation at break of 20% or more in the non-shrinking direction after aging, allowing the film to have excellent processability without film breakage in processing such as printing after aging.

Heat-shrinkable polyester-based film of the present invention includes a single-layer of the present inventive heat-shrinkable polyester film and a laminated heat-shrinkable film comprising the present inventive heat-shrinkable polyester film and a different resin layer.

A package product covered by a label of the heat-shrinkable polyester-based film of the present invention has excellent appearance.

DESCRIPTION OF EMBODIMENTS

The copolymerized polyester raw material for film of the present invention (hereinafter merely "raw material" in some cases) and heat-shrinkable polyester-based film will now be described in detail. Detailed method for producing the heat-shrinkable polyester-based film will be described later, and in general, heat-shrinkable film is produced through conveying and stretching with rolls. The conveying direction of the film is referred to as a longitudinal direction and the direction orthogonal to the longitudinal direction is referred to as a width direction of the film. Therefore, in the following, the width direction of the heat-shrinkable polyester-based film indicates the direction vertical to the roll unwinding direction, and the longitudinal direction of the film indicates the direction parallel to the roll unwinding direction.

The raw material of the present invention comprises 5 mol% or more and 40 mol% or less of constituent unit derived from diethylene glycol in 100 mol% of total glycol component amount. As described later, the constituent unit derived from diethylene glycol causes generation of foreign substances during film production, so diethylene glycol has been generally contained as little as possible in terms of film quality. Conversely, the copolymerized polyester raw material of the present invention has low melt viscosity even at a resin temperature of 250°C, enabling resin extrusion at a lower temperature than that of general polyester raw materials. Although the raw material of the present invention comprises a large amount of diethylene glycol with 5 mol% or more and 40 mol% or less of the constituent unit derived from diethylene glycol in 100 mol% of total of glycol component amount, the film, which has 40 $\mu$m thick, can give a reduced average defects number of 1.1 or less per a film of 100 m$^2$ with a defect size of 1 mm or more in a longitudinal direction of the film or a width direction of the film.

It is known that the amount of monomer component constituting the unit which can become an amorphous component (hereinafter, merely "amorphous component" in some cases) can be increased in the film having ethylene terephthalate as a main component, allowing a heat-shrinkable polyester film to have higher shrinkability. In the production of conventional films by transverse uniaxial stretching method, as the amount of amorphous component is increased, adequate increase in shrinkage ratio is observed. Unfortunately, neopentylglycol and cyclohexanedimethanol disclosed as amorphous components in PTL 2 are expensive. Addition of neopentylglycol or cyclohexanedimethanol does not lower Tg, so the film may break during production due to fluctuation in the stretching temperature at industrially high stretching ratio, leading to decreased productivity.

In order to improve such weaknesses, polybutylene terephthalate or polypropylene terephthalate, which has lower glass transition temperature than PET (polyethylene terephthalate) and is capable of decreasing stretching stress, is added in film production in PTL 2. However, polybutylene terephthalate and polypropylene terephthalate have different bulk density from PET raw materials, leading to the segregation of the raw materials on the way to an extruder after mixing raw materials. This segregation of the raw materials causes fluctuation in raw material blend ratio in a longitudinal direction of film, resulting in difference in physical properties in the longitudinal direction of the film.

That led the present inventors to focus on diethylene glycol (hereinafter merely "DEG" in some cases).

Increased content of diethylene glycol in films will deteriorate heat resistance and increase in discharge of foreign substances during melt extrusion. For that, diethylene glycol has not been positively used in the past. Conversely, the inventors found that the use of diethylene glycol as a constituent unit of polyester resin will lower Tg of the film, decrease stretching stress during film stretching, and further suppress reduction of shrinkage ratio measured at a low temperature of about 70°C after aging.

The copolymerized polyester of the present invention, which is used for producing films such as the heat-shrinkable polyester-based film, preferably has an ethylene terephthalate unit as a main constituent component. The term "as a main constituent component" indicates that the constituent component is contained in 50 mol% or more of the total constituent components. The film preferably has the ethylene terephthalate unit in amount of 50 mol% or more, more preferably 60 mol% or more, and further preferably 70 mol% or more in 100 mol% of constituent units of the polyester.

In addition to terephthalic acid, examples of the dicarboxylic acid components constituting the polyester of the present invention include aromatic dicarboxylic acids such as isophthalic acid, orthophthalic acid, and 2,6-naphthalenedicarboxylic acid; aliphatic dicarboxylic acids such as adipic acid, azelaic acid, sebacic acid, and decanedicarboxylic acid; and alicyclic dicarboxylic acid such as 1,4-cyclohexanedicarboxylic acid. Preferably, the polyester of the present invention is free from dicarboxylic acid component other than terephthalic acid.

In the present invention, a monomer unit indicates a repeating unit that forms a polymer derived from one polyhydric alcohol molecule and one polycarboxylic acid molecule.

In case where the polymer comprise the monomer unit derived from terephthalic acid and ethylene glycol (i.e., ethylene terephthalate unit) as a main monomer unit, examples of the other monomer units include a monomer unit derived from isophthalic acid and ethylene glycol, a monomer unit derived from terephthalic acid and neopentylglycol, a monomer unit derived from terephthalic acid and 1,4-cyclohexanedimethanol, and a monomer unit derived from isophthalic acid and butanediol. Preferably, the polyester of the present invention is free from the above-described other monomer units.

Preferably, the polyester is free from a polycarboxylic acid having three or more valences such as trimellitic acid, pyromellitic acid, and anhydride thereof. The polyester comprising these polycarboxylic acids will prevent the heat-shrinkable polyester-based film from attaining required high shrinkage ratio.

In addition to the ethylene terephthalate unit, examples of other diol components constituting the polyester include aliphatic diols such as 1,3-propanediol, 2,2-diethyl-1,3-propanediol, 2-n-butyl-2-ethyl-1,3-propanediol, 2,2-isopropyl-1,3-propanediol, 2,2-di-n-butyl-1,3-propanediol, 1,4-butanediol, hexanediol, neopentylglycol, and hexanediol; alicyclic diols such as 1,4-cyclohexanedimethanol; and aromatic diols such as bisphenol A. The diol component constituting the copolymerized polyester of the present invention other than the ethylene terephthalate unit may be diethylene glycol.

The copolymerized polyester of the present invention, which is used for producing films such as the heat-shrinkable polyester-based film, is required to comprise the constituent unit derived from diethylene glycol. The polyester comprises preferably 5 mol% or more of the constituent unit derived from diethylene glycol, more preferably 7 mol% or more, and further preferably 9 mol% or more in 100 mol% of constituent units of polyester. The upper limit of the constituent unit derived from diethylene glycol is preferably 40 mol% or less, more preferably 38 mol% or less, and further preferably 36 mol% or less. The constituent unit derived from diethylene glycol can improve film formability by decreasing glass transition temperature of polyester. Additionally, containing 5 mol% or more of the constituent unit derived from diethylene glycol preferably improves the effects of the present invention such as decrease in shrinkage ratio and shrinkage stress measured at 70°C after aging. In contrast, containing more than 40 mol% of a diethylene glycol component will soften resin and thus cause the resin to stick to cooling rolls during the step of cooling and solidification after melt extrusion, hence the productivity will be undesirably deteriorated.

Among the monomer components, monomers which can become amorphous components are exemplified by neopentylglycol, 1,4-cyclohexanedimethanol, isophthalic acid, 1,4-cyclohexanedicarboxylic acid, 2,6-naphthalenedicarboxylic acid, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol. The content of the monomers which can become amorphous components is preferably 0 mol% or more and 5 mol% or less in the copolymerized polyester, more preferably 0 mol%, which indicates that such monomers are not contained.

Controlling the content of the constituent unit derived from diethylene glycol within the above ranged will give the polyester having controlled glass transition temperature (Tg) of 55 to 73°C. Tg of lower than 55°C will cause change in film physical properties due to moving of molecules in films during storage at room temperature in a warehouse, especially in summer. Tg is preferably 57°C or higher, and further preferably 59°C or higher. Higher Tg will decrease stretchability during film production, therefore, Tg is preferably 71°C or lower, and further preferably 69°C or lower.

The polyester is preferably free from diol having 8 or more of carbon atoms such as octanediol, or polyhydric alcohol having three or more valences such as trimethylolpropane, trimethylolethane, glycerin, and diglycerol. The heat-shrinkable polyester-based film produced from polyester containing these diols or polyhydric alcohols may not attain required high shrinkage. Preferably, the polyester comprises as little triethylene glycol and polyethylene glycol as possible.

Diethylene glycol is preferably copolymerized in the polyester. The copolymerization will eliminate a concern of segregation of raw materials, and that will prevent changes in physical properties of the film due to fluctuation of the raw material composition of the film. Moreover, the copolymerization will promote transesterification, namely copolymerization will proceed randomly, resulting in advantages of increased shrinkage ratio in the main-shrinking direction due to decreased crystallinity.

The resin forming the heat-shrinkable polyester-based film of the present invention may contain additives such as waxes, antioxidants, antistatic agents, crystal nucleating agents, viscosity reducing agents, heat stabilizers, coloring pigments, color inhibitor, ultraviolet absorbers, if needed.

The resin forming the heat-shrinkable polyester-based film of the present invention may preferably contain lubricants of fine particles to improve workability such as slipperiness of the film. Any type of fine particles may be selected, and the examples of the fine particles include inorganic fine particles such as silica, alumina, titanium dioxide, calcium carbonate, kaolin, and barium sulfate, and organic fine particles such as acrylic resin particles, melamine resin particles, silicone resin particles, and cross-linked polystyrene particles. The fine particles may desirably have an average particle diameter ranged within 0.05 to 4 μm measured by Coulter counter, if needed.

In case where the film contains silica in amount of 50 ppm or more and 3000 ppm or less, the average particle diameter of the fine particles can be controlled within above range. The content of silica is preferably 200 ppm or more, and further preferably 300 ppm or more. Too high content of silica will impair transparency, and thus the film requiring transparency preferably contains silica in amount of 2000 ppm or less, and further preferably 1500 ppm or less.

The fine particles may be added to the resin forming the heat-shrinkable polyester-based film at any step during polyester resin production. The fine particles are added preferably in the form of a slurry dispersed in ethylene glycol during the step of esterification or after the finish of transesterification and before the start of polycondensation, and polycondensation reaction proceeds. Preferably, the fine particles are blended with the polyester resin raw materials in the form of a slurry dispersed in ethylene glycol or water with vented kneading extruder, or dried fine particles are blended with the polyester resin raw materials with kneading extruder.

The heat-shrinkable polyester-based film of the present invention may be subjected to surface treatment such as corona treatment, coating treatment, or flame treatment to enhance adhesiveness of the film surface.

Characteristics of the copolymerized polyester raw material and the heat-shrinkable polyester-based film of the present invention will be described.

The copolymerized polyester raw material of the present invention preferably has the intrinsic viscosity of 0.60 dl/g or more and 0.85 dl/g or less. This range of intrinsic viscosity under the melt extrusion conditions described below enables the intrinsic viscosity of the heat-shrinkable polyester-based film to be controlled to 0.57 dl/g or more and 0.82 dl/g or less. The intrinsic viscosity of less than 0.57 dl/g of the heat-shrinkable polyester-based film will undesirably lead to tensile elongation at break of less than 5% in the longitudinal direction of the film after aging. The heat-shrinkable polyester-based film has the intrinsic viscosity of preferably 0.60 dl/g or more, and more preferably 0.63 dl/g or more. Since there is little demand for the heat-shrinkable polyester-based film with an intrinsic viscosity more than 0.82 dl/g, the upper limit of the hot-water heat shrinkage ratio is determined to be 0.82 dl/g.

Amorphous copolymerized polyester raw material of the present invention has the melt viscosity of preferably 200 Pa · S or less in a measurement at 255°C and shear rate of 6080 /S. Resin having high melt viscosity requires high resin temperature for extrusion, otherwise extrusion will be difficult. However, such a high resin temperature of present inventive raw material containing high amount of diethylene glycol undesirably causes more foreign substances in the film or sheet after extrusion. Accordingly, the resin temperature is preferably 265°C or lower, and further preferably 260°C or lower. Lower resin temperature is preferable; however, too low resin temperature will cause unmelted materials. Therefore, the lower limit of the resin temperature is 235°C or lower.

The melt viscosity of 200 Pa·S or more in the measurement at 255°C increases pressure load on an extruder of melted raw materials, undesirably leading to the requirement for larger equipment. The melt viscosity is preferably 190 Pa·S or less, and further preferably 180 Pa·S or less.

Too low melt viscosity undesirably will cause thickness nonuniformity due to reduced shear stress at discharge part for melted resin. The melt viscosity measured at 255°C is preferably 100 Pa·S or more, and further preferably 110 Pa·S or more.

The heat-shrinkable film produced from the copolymerized polyester raw material of the present invention, which has, for example, 40 $\mu$m thick, may preferably has the defects number of 1.1 or less per a film of 100 m$^2$ with a defect size of 1 mm or more in a longitudinal direction or a width direction of the film. The film having more than 1.1 of defects causes blanking of inks on the spots of defects or foreign substances during printing, resulting in poor appearance of the label after printing. The number of defects per a film of 100 m$^2$ in a longitudinal direction or a width direction of the film is more preferably 1 or less, and further preferably 0.5 or less.

The heat-shrinkable polyester-based film of the present invention is immersed in hot water of 98°C with no load for 10 seconds, and immediately after the first immersion, the film is further immersed in water of 25°C±0.5°C for 10 seconds. The heat shrinkage ratio, that is, the hot-water heat shrinkage ratio at 98°C, in the width direction as the main-shrinking direction of the film is calculated from the length before and after shrinkage according to the following Equation 1. The hot-water heat shrinkage ratio at 98°C is 40% or more and 85% or less.

$$\text{Equation 1: heat shrinkage ratio} = \{(\text{length before shrinkage-length after shrinkage})/\text{length before shrinkage}\} \times 100 \, (\%)$$

The heat-shrinkable polyester-based film with hot-water heat shrinkage ratio at 98°C in the main-shrinking direction of less than 40% cannot meet the demand for a high-shrinkage film that covers the entire container (so-called full label). In addition, a label made from such a film will have strain, shrinkage insufficiency, wrinkles, or sagging after heat-shrinking due to small amount of shrinkage. The hot-water heat shrinkage ratio at 98°C is preferably 45% or more, and more preferably 50% or more. Since there is little demand for the film with hot-water heat shrinkage ratio at 98°C in the main-shrinking direction of more than 85%, the upper limit of the hot-water heat shrinkage ratio is determined to be 85%.

The heat-shrinkable polyester-based film of the present invention has the hot-water heat shrinkage ratio at 98°C in a direction orthogonal to the main-shrinking direction of the film, i.e., the longitudinal direction, of -5% or more and 15% or less, which is measured in the same manner as the above. The hot-water heat shrinkage ratio at 98°C in the direction orthogonal to the main-shrinking direction of less than -5% causes too much elongation of the film upon heating, undesirably leading to poor appearance as labels for containers. In contrast, the hot-water heat shrinkage ratio at 98°C in the direction orthogonal to the main-shrinking direction of more than 15% causes label shortening due to a decrease in label height after heat-shrinkage, leading to a decrease in label area. Therefore, the film is unsuitable as label for a full label. In addition, the label made from such a film undesirably will have strain after heat-shrinkage. The upper limit of the hot-water heat shrinkage ratio at 98°C in the direction orthogonal to the main-shrinking direction is preferably 12% or less, and more preferably 9% or less.

The hot-water heat shrinkage ratio at 98°C in the direction orthogonal to the main-shrinking direction of less than -5% causes an increase in label height after heat-shrinkage, undesirably leading to baggy label's excess or wrinkles. Therefore, the lower limit is determined to be -5%.

The heat-shrinkable polyester-based film of the present invention is immersed in hot water of 70°C with no load for 10 seconds, and immediately after the first immersion, the film is further immersed in water of 25°C±0.5°C for 10 seconds. The heat shrinkage ratio, that is, the hot-water heat shrinkage ratio at 70°C, in the direction orthogonal to the main-shrinking direction, i.e., longitudinal direction, is calculated from the length before and after shrinkage according to the following Equation 1. And the hot-water heat shrinkage ratio at 70°C is -5% or more and 5% or less.

The hot-water heat shrinkage ratio at 70°C in the direction orthogonal to the main-shrinking direction of less than -5% causes too much elongation of the film upon heating, undesirably leading to poor appearance as labels for containers. In contrast, the hot-water heat shrinkage ratio at 70°C in the direction orthogonal to the main-shrinking direction of more than 5% undesirably causes strain of the label after heat-shrinkage. The upper limit of the hot-water heat shrinkage ratio at 70°C in the direction orthogonal to the main-shrinking direction is preferably 4% or less, and more preferably 3% or less.

Thickness of the heat-shrinkable polyester-based film of the present invention is not particularly limited, and the thickness is preferably 10 $\mu$m or more and 60 $\mu$m or less. The lower limit of the thickness is more preferably 15 $\mu$m.

For the production of the heat-shrinkable polyester-based film of the present invention, the polyester raw material is melt-extruded from an extruder to form an unstretched film, and the unstretched film is then stretched in the width direction. The polyester is produced through polycondensation reactions of appropriate dicarboxylic acid components and diol components by known method, and the polyester in chip form is generally used as raw materials for film.

Polyester materials are preferably dried with a hopper dryer, a paddle dryer, or a vacuum dryer for melt extrusion of raw material resin. The dried polyester raw materials are melted at 235 to 265°C and extruded into a film with an extruder.

In the process with an extruder, prevention of degrading raw materials and causing foreign substance, stable discharge of resin from a die at appropriate melt viscosity, and progression of transesterification are important. The resin raw material is extruded at the temperature of 235 to 265°C to reduce foreign substances caused by degrading resin as described above. The melt viscosity at 235 to 265°C and shear rate of 5000 to 8000 /S is preferably controlled to 100 Pa·S or more and 200 Pa·S or less. As described above, this range can reduce the load of an extruder and prevent thickness nonuniformity from getting worse. The shear rate was determined according to the following Equation (2). The resin can have the shear rate within the above range by controlling the discharge rate of the raw material and lip gap of die.

Shear rate

$$\text{Equation (2): } \gamma = 6Q / (W \times H^2)$$

$\gamma$; shear rate (sec$^{-1}$)
Q; discharge rate of raw material from extruder (cm$^3$/sec)
W; width of die's opening at exit (cm)
H; lip gap of die (cm)

In general, transesterification can be accelerated by raising the temperature of an extruder or increasing the residence time of resin, however, these methods will cause foreign substances due to resin degradation. Therefore, an extrusion screw with shafts of 2 or more to 32 or less is preferably used to accelerate transesterification in a short period of time. The shear force during kneading is increased with an increase in the number of screws, leading to an accelerated transesterification. Increased number of screws can accelerate transesterification; however, too high number of screws requires labor for machine maintenance. Therefore, the upper limit is determined to be 32.

An unstretched film is produced by rapidly cooling sheet-shaped melted resin after extrusion. In the preferred method of cooling melted resin, the resin is cast on rotating drums from a nozzle and then rapidly cooled and solidified to form substantially unoriented resin sheet.

(Transverse stretching and relaxation after transverse stretching)

The following methods (1) and (2) can more desirably develop performances of the copolymerized polyester of the present invention. From the viewpoint of simplifying production facilities, it is preferable to form the film by transverse uniaxial stretching.

(1) Control of transverse stretching conditions

The film is preheated to a temperature ranged from Tg+10°C or higher and Tg+40°C or lower while both ends in the width direction of the film being grasped by clips in a tenter for transverse stretching. After that, the film is stretched in the width direction preferably by 3.5 to 6 times while the film being cooled so that the film temperature becomes Tg-5°C or higher and Tg+10°C or lower. Stretching in the width direction with cooling can increase the stress ratio in a stress-strain curve (calculated by dividing tensile stress by upper yield stress in final stretching) resulting in decreased thickness nonuniformity in the width direction. The film is then heat treated preferably at a temperature stretching temperature +1°C to stretching temperature +15°C after transverse stretching. If the heat treatment temperature is lower than the stretching temperature, molecular orientation cannot be sufficiently relaxed, and this insufficient relaxation disadvantageously leads to high shrinkage of the film products during storage in a warehouse (so called natural shrinkage). The higher heat treatment temperature than the stretching temperature +15°C disadvantageously leads to decreased shrinkage ratio in the width direction.

(2) Relaxation in the width direction after transverse stretching

In the heat treatment step, the film is relaxed in the width direction preferably by 0% to 5% while both ends in the width direction of the film is grasped by clips in a tenter. Relaxation by 0% means that the film is not relaxed. Relaxation of the film will slightly decrease shrinkage ratio in the width direction; however, molecular orientation will be relaxed in the width direction, and that can decrease shrinkage stress and natural shrinkage ratio. In addition, heat treatment at a temperature higher than the stretching temperature in the final heat treatment step will lead to relaxed molecular orientation, enabling the film to have decreased shrinkage stress and natural shrinkage ratio.

The package product of the present invention includes the package product produced by covering at least a part of periphery of object for packaging with perforated or notched heat-shrinking the label prepared from the heat-shrinkable polyester-based film of the present invention. The object for packaging is exemplified by various bottles such as PET bottles for beverages, cans, plastic containers for confectionery or packed lunch, and paper boxes. The attachment of the labels prepared from the heat-shrinkable polyester-based film to these objects generally requires heat shrinkage of the labels by approximately 5 to 70%, and the labels are closely attached to the objects. The labels for covering the objects for packaging may be or may not be printed.

The following two methods can be suggested for preparing labels from the heat-shrinkable polyester-based film of the present invention. In one method, organic solvents are applied slightly inward from an end of one side of a rectangular-shaped film, and the film is immediately rolled up to form a label by overlapping and adhering both ends. In the other method, organic solvents are applied slightly inward from an end of one side of a wound film in a roll, then the film is immediately rolled up to overlap and adhere both ends, and thus obtained tubular film is cut to labels. The organic solvents for the adhesion are preferably exemplified by cyclic ethers such as 1,3-dioxolane or tetrahydrofuran; mixtures of these solvents with amorphous resins; aromatic hydrocarbons such as benzene, toluene, xylene, trimethylbenzene; halogenated hydrocarbons such as methylene chloride and chloroform; phenols such as phenol; or mixtures thereof. The film can also be label shape by applying heat and thermally bonding, so-called by heat sealing or fusion sealing.

EXAMPLES

The present invention will be now described specifically with Examples and Comparative Examples, but the present invention is not limited to the embodiments, and can be appropriately modified within the scope not departing from the gist of the present invention. The evaluation methods of the film are described below.

[Heat shrinkage ratio (hot-water heat shrinkage ratio)]

The film was cut into 10 cm x 10 cm squares and immersed in hot water of prescribed temperature (°C) ±0.5 (°C) for 10 seconds with no load to be heat-shrunk. After that, the film sample was immersed in water of 25°C ± 0.5°C for 10 seconds and pulled out of the water to measure the dimension of the film both in longitudinal and transverse directions. Heat shrinkage ratio of the film was determined according to the following Equation (1).

$$\text{Equation (1): Heat shrinkage ratio} = \{(\text{length before shrinkage} - \text{length after shrinkage}) / \text{length before shrinkage}\} \times 100(\%)$$

[Tensile elongation at break in longitudinal direction after aging]

After the aging of the film for 672 hours in an environmental test chamber set to a temperature of 40°C and a humidity of 65%, the film was made to strip-shaped test pieces having the size of 140 mm in the longitudinal direction of the film and 20 mm in the direction orthogonal to the measurement direction, i.e., the width direction of the film. The test pieces were grasped at both ends by chucks by 20 mm respectively with the distance between the chucks of 100 mm, and tensile test was conducted with a universal tensile strength tester "DSS-100" (manufactured by Shimadzu Corporation) under the conditions of ambient temperature of 23°C and tensile speed of 200 mm/min. Elongation at break was defined as tensile elongation at break and evaluated as follows from the measurement of 10 test pieces.

Good: 9 or 10 test pieces have elongation at break of 30% or more.
Bad: 8 or more test pieces have elongation at break of less than 30%.

[Melt viscosity]

Melt viscosity was measured with Capirograph 1D PMD-C (manufactured by Toyo Seiki Seisakusho, Ltd) under conditions of resin temperature of 255°C and shear rate 6080 /S in accordance with JIS K7199.

[Intrinsic viscosity (IV)]

Intrinsic viscosity was measured at 30°C with an Ostwald viscometer for the polyester (0.2 g) prepared by dissolving into a mixed solvent (50 ml) of phenol/1,1,2,2-tetrachloroethane (60/40, weight ratio). Measurement results were expressed in the unit of dl/g.

[Counting method of defects]

The film was cut into a sample with the size of 0.5 m in the width direction and 5 m in the longitudinal direction. Then the sample was placed on a desktop film orientation viewer (manufactured by Unitika), and polarized light was applied thereto. After that, the number of defects having the size of 1 mm or more was counted using a loupe with a magnification 10x. The number of defects was counted for a totally 80 films (200 m$^2$) in the same manner. An average defects number per 100 m$^2$ of film was determined according to the following Equation 3.

$$\text{Equation 3: average defects number} = \text{total defects number} / 2 \text{ (defects/100 m}^2)$$

[Diethylene glycol content]

The heat-shrinkable film was cut with a razor blade for sampling, and sampled film (about 5 mg) was dissolved into mixed solution (0.7 ml) of deuterochloroform and trifluoroacetic acid (9/1, volume ratio). An existing amount of the diethylene glycol unit was calculated with 1H-NMR (UNITY 50, manufactured by Varian), and the measured value was expressed in mol%.

[Tg (glass transition temperature)]

Tg was measured from -40°C to 120°C at a heating rate of 10°C/min with a differential scanning calorimeter (type: DSC220; manufactured by Seiko Electronic Industry) using unstretched film (5 mg). In the endothermic curve, the glass transition temperature (Tg) was determined at a crossing point temperature of an extended base line lower than the glass transition temperature and a tangent line having the maximum slope in a transition part.

[Shrinkage finish property]

The heat-shrinkable film was printed in three colors with grass, gold, and white inks (manufactured by TOYO INK CO., LTD.) in advance. Then, both ends of the printed film were adhered with a solution of 1,3-dioxolane mixed with 10% of PET resin (Vylon200, manufactured by TOYOBO CO., LTD.) to form cylindrical labels, which has the main-shrinking direction of the heat-shrinkable film as a circumferential direction. After that, the label was cut and had a diameter in a label shrinkage direction of 70 mm. The labels were then heat-shrunk and attached to a PET bottle (500 ml, a trunk diameter: 62 mm, a minimum neck diameter: 25 mm) at a zone temperature of 90°C with passing time of 4 seconds with a steam tunnel (type: SH-1500-L, manufactured by Fuji Astec Inc.). In the neck portion of a bottle, the label was attached with adjustment so that one end of the label came on a bottle portion of 45 mm in diameter. Shrinkage finish property was visually evaluated according to the following criteria.

[Strain by shrinkage in label]

Strain of the attached label was evaluated based on a gauge measurement for shrinkage finish property. The label was measured with a gauge in 360-degree direction at lower and upper portions of the attached label, and the maximum strain values of the lower and upper portions were respectively determined. Strain of the label was evaluated according to the following criteria.

Good: maximum strain is less than 3 mm.
Bad: maximum strain is 3 mm or more.

[Shrinkage insufficiency of label]

Shrinkage state of the label were evaluated according to the following criteria.

Good: attached label is shrunk with no sagging between the label and containers.
Bad: attached label is shrunk with sagging due to insufficient shrinkage between the label and containers.

[Wrinkles of label]

Wrinkling state of label was evaluated under the same measurement conditions with the strain by shrinkage in label according to the following criteria.

Good: the number of wrinkles in a size of 2 mm or more is 2 or less.
Bad: the number of wrinkles in a size of 2 mm or more is 3 or more.

[Productivity]

Productivity was judged in accordance with the number of breaks during 2 hours of film formation according to the following criteria.

Good: one time of break or less per 2 hours
Bad: two times of break or more per 2 hours

<Preparation of polyester raw materials >

Raw materials A to H were prepared by a conventional method of polycondensation via transesterification from dimethyl terephthalate (DMT) and the following glycol components.

Raw material A: polyester consisting of 40 mol% of diethylene glycol, 60 mol% of ethylene glycol, and terephthalic acid. Intrinsic viscosity is 0.831 dl/g. Melt viscosity is 170 Pa·S at shear rate of 6080 /S·255°C.

Raw material B: polyester consisting of 7 mol% of diethylene glycol, 93 mol% of ethylene glycol, and terephthalic acid. Intrinsic viscosity is 0.631 dl/g. Melt viscosity is 100 Pa·S at shear rate of 6080 /S·255°C.

Raw material C: polyester consisting of 30 mol% of diethylene glycol, 70 mol% of ethylene glycol, and terephthalic acid. Intrinsic viscosity is 0.731 dl/g. Melt viscosity is 130 Pa·S at shear rate of 6080 /S·255°C.

Raw material D: polyester consisting of 20 mol% of diethylene glycol, 80 mol% of ethylene glycol, and terephthalic acid. Intrinsic viscosity is 0.731 dl/g. Melt viscosity is 140 Pa·S at shear rate of 6080 /S·255°C.

Raw material E: polyester consisting of 3 mol% of diethylene glycol, 97 mol% of ethylene glycol, and terephthalic acid. Intrinsic viscosity is 0.731 dl/g. Melt viscosity is 170 Pa·S at shear rate of 6080 /S·255°C.

Raw material F: polyester consisting of 20 mol% of diethylene glycol, 80 mol% of ethylene glycol, and terephthalic acid. Intrinsic viscosity is 0.91 dl/g. Melt viscosity is 215 Pa·S at shear rate of 6080 /S·255°C.

Raw material G: polyester consisting of 30 mol% of diethylene glycol, 70 mol% of ethylene glycol, and terephthalic acid. Intrinsic viscosity is 0.551 dl/g. Melt viscosity is 88 Pa·S at shear rate of 6080 /S·255°C.

Raw material H: polyester consisting of 60 mol% of diethylene glycol, 40 mol% of ethylene glycol, and terephthalic acid. Intrinsic viscosity is 0.651 dl/g. Melt viscosity is 110 Pa·S at shear rate of 6080 /S·255°C.

Raw material I: polyester consisting of 60 mol% of diethylene glycol, 40 mol% of ethylene glycol, and terephthalic acid. Intrinsic viscosity is 0.651 dl/g. Melt viscosity is 105 Pa·S at shear rate of 6080 /S·255°C.

For the production of polyester raw materials A to G, a lubricant of $SiO_2$ (Silysia 266, manufactured by FUJI SILYSIA CHEMICAL LTD) was added to the polyester by a proportion of 700 ppm. Similar silica was added to raw material I by a proportion of 7200 ppm. In Table 1, TPA represents terephthalic acid, EG represents ethylene glycol, and DEG represents diethylene glycol. Each polyester was prepared in the form of chips, if needed.

Tables 1 and 2 show the composition of polyester raw materials used in Examples and Comparative Examples and resin composition and manufacturing conditions of films in Examples and Comparative Examples.

[Table 1]

| | Dicarboxylic acid component (mol%) | Polyhydric alcohol component (mol%) | | Adding amount of lubricant (ppm) | Tg (°C) | Intrinsic viscosity (dl/g) | Melt viscosity (Pa·S) |
|---|---|---|---|---|---|---|---|
| | TPA | EG | DEG | | | | |
| Raw material A | 100 | 60 | 40 | 700 | 62 | 0.83 | 170 |
| Raw material B | 100 | 93 | 7 | 700 | 72 | 0.63 | 100 |
| Raw material C | 100 | 70 | 30 | 700 | 65 | 0.73 | 130 |
| Raw material D | 100 | 80 | 20 | 700 | 69 | 0.73 | 140 |
| Raw material E | 100 | 97 | 3 | 700 | 73 | 0.73 | 170 |
| Raw material F | 100 | 80 | 20 | 700 | 69 | 0.9 | 215 |
| Raw material G | 100 | 70 | 30 | 700 | 65 | 0.55 | 88 |
| Raw material H | 100 | 40 | 60 | 0 | 58 | 0.65 | 110 |
| Raw material I | 100 | 40 | 60 | 7200 | 58 | 0.65 | 105 |

[Table 2]

| | Raw material | Resin temperature in extruder (°C) | Transverse stretching step | | | | | Productivity |
|---|---|---|---|---|---|---|---|---|
| | | | Preheating temperature (°C) | Stretching temperature (°C) | Stretching ratio | Heat treatment temperature (°C) | Transverse relaxation ratio (%) | |
| Example 1 | A | 255 | 120 | 75 | 4 | 76 | 5 | Good |
| Example 2 | B | 255 | 120 | 75 | 4 | 76 | 5 | Good |
| Example 3 | C | 255 | 120 | 75 | 4 | 76 | 5 | Good |
| Example 4 | D | 255 | 120 | 75 | 4 | 76 | 5 | Good |
| Example 5 | A | 255 | 125 | 78 | 5.2 | 79 | 5 | Good |
| Example 6 | B | 255 | 125 | 78 | 5.2 | 79 | 5 | Good |
| Comparative Example 1 | E | 255 | 125 | 78 | 5.2 | 79 | 5 | Bad |
| Comparative Example 2 | F | 280 | 120 | 75 | 4 | 76 | 5 | Good |
| Comparative Example 3 | G | 255 | 120 | 75 | 4 | 76 | 5 | Good |
| Comparative Example 4 | H:I = 90:10 (weight ratio) | 255 | 120 | 75 | 4 | 76 | 5 | Good |

Example 1

Raw material A was fed into an extruder. The resin was melted at 255°C and extruded from a Z'die, then quenched by winding the resin around rotating metal rolls cooled to a surface temperature of 30°C to form an unstretched film having a thickness of 152 μm at taking-up speed of the unstretched film (i.e., a rotational speed of the metal rolls) of 30 m/min. The unstretched film had Tg of 62°C. The unstretched film was then introduced to a tenter, and preheated at film surface temperature of 120°C, and stretched 4 times in the width direction while the film being cooled so that a surface temperature became 75°C. Then the film was relaxed in the width direction by 5% while the film being heated so that a surface temperature became 76°C. After that, the film was cooled and cut to remove both ends, and rolled up to produce uniaxially oriented film having a width of 500 mm and a thickness of 40 μm continuously over a predetermined length. Properties of thus obtained film was evaluated by the method described above. Table 3 shows the evaluation results, and the results were excellent.

Example 2

The film having a thickness of 40 μm was produced in the same manner as Example 1 except that raw material A was changed to raw material B. Table 3 shows the evaluation results, and the results were excellent similarly with Example 1.

Example 3

The film having a thickness of 40 μm was produced in the same manner as Example 1 except that raw material A was changed to raw material C. Table 3 shows the evaluation results, and the results were excellent similarly with Example 1.

Example 4

The film having a thickness of 40 μm was produced in the same manner as Example 1 except that raw material A was changed to raw material D. Table 3 shows the evaluation results, and the results were excellent similarly with Example 1.

Example 5

Raw material A was fed into an extruder. The resin was melted at 255°C and extruded from a Z'die, then quenched by winding the resin around rotating metal rolls cooled to a surface temperature of 30°C to form an unstretched film having a thickness of 198 μm at taking-up speed of the unstretched film (i.e., rotational speed of the metal rolls) of 30 m/min. The unstretched film had Tg of 62°C. The unstretched film was then introduced to a tenter, and preheated at film surface temperature of 125°C, and stretched 6 times in the width direction while the film being cooled so that a surface temperature became 78°C. Then the film was relaxed in the width direction by 5% while the film being heated so that a surface temperature became 79°C. After that, the film was cooled and cut to remove both ends, and rolled up to produce uniaxially oriented film having a width of 500 mm and a thickness of 40 μm continuously over a predetermined length. Properties of thus obtained film was evaluated by the method described above. Table 3 shows the evaluation results, and the results were excellent.

Example 6

The film having a thickness of 40 μm was produced in the same manner as Example 5 except that raw material A was changed to raw material B. Table 3 shows the evaluation results, and the results were excellent similarly with Example 5.

Comparative Example 1

The film was produced in the same manner as Example 5 except that raw material A was changed to raw material E. However, productivity was not stable due to occasional breakage during film production. Table 3 shows the evaluation results of the film. Compared to Example 5, the film of Comparative Example 1 had lower shrinkage ratio in the width direction and higher shrinkage ratio in the longitudinal direction, resulting in poor shrinkage finish property.

Comparative Example 2

The film having a thickness of 40 μm was produced in the same manner as Example 1 except that raw material A was changed to raw material F. The high melt viscosity of raw material F increased pressure load on the extruder, so the resin temperature in the extruder was also changed by raising it from 255°C to 280°C. Table 3 shows the evaluation results of the film. Compared to Example 1, the film of Comparative Example 2 had higher number of defects and was inferior as a heat-shrinkable film requiring printing.

Comparative Example 3

The film having a thickness of 40 μm was produced in the same manner as Example 1 except that raw material A was changed to raw material G. Table 3 shows the evaluation results of the film. The low tensile elongation at break in the longitudinal direction after aging caused continuous breakage during printing process, resulting in poor productivity of film roll.

Comparative Example 4

The film having a thickness of 40 μm was produced in the same manner as Example 1 except that raw material A was changed to raw material H and I (raw material H: raw material I = 90:10 (weight ratio)). Table 3 shows the evaluation results of the film. Compared to Example 1, the film of Comparative Example 4 had higher number of defects and was inferior as a heat-shrinkable film requiring printing. The high shrinkage ratio at 70°C in the main-shrinking direction disadvantageously led to poor shrinkage finish property with wrinkles.

[Table 3]

| | Film intrinsic viscosity (dl/g) | Thickness (μm) | Shrinkage ratio (%) | | | | Strain by shrinkage in label | | Shrinkage insufficiency of label | Wrinkles of label | Defects number with size of 1 mm or more (defects/100m²) | Tensile elongation at break in longitudinal direction after aging |
|---|---|---|---|---|---|---|---|---|---|---|---|---|
| | | | at 70°C, in longitudinal direction | at 70°C, in width direction | at 98°C, in longitudinal direction | at 98°C, in width direction | lower portion | upper portion | | | | |
| Example 1 | 0.81 | 40 | -4 | 50 | -1 | 70 | Good | Good | Good | Good | 0.5 | Good |
| Example 2 | 0.69 | 40 | 3 | 25 | 10 | 65 | Good | Good | Good | Good | 0 | Good |
| Example 3 | 0.68 | 40 | -3 | 47 | 0 | 68 | Good | Good | Good | Good | 0.5 | Good |
| Example 4 | 0.68 | 40 | -1 | 41 | 6 | 67 | Good | Good | Good | Good | 0.5 | Good |
| Example 5 | 0.81 | 40 | -1 | 55 | 2 | 77 | Good | Good | Good | Good | 1 | Good |
| Example 6 | 0.59 | 40 | 4.5 | 22 | 11 | 68 | Good | Good | Good | Good | 0 | Good |
| Comparative Example 1 | 0.69 | 40 | 6 | 15 | 16 | 39 | - | - | Bad | Bad | 0 | Good |
| Comparative Example 2 | 0.65 | 40 | -3 | 45 | 4 | 63 | Good | Good | Good | Good | 2.5 | Good |
| Comparative Example 3 | 0.51 | 40 | -4 | 39 | -2 | 63 | - | - | - | - | 0.5 | Bad |
| Comparative Example 4 | 0.62 | 40 | -5 | 58 | -1 | 75 | Good | Good | Good | Bad | 1.4 | Good |

*⁻ indicates that film was not evaluated due to impossibility of printing.

INDUSTRIAL APPLICABILITY

The copolymerized polyester raw material of the present invention is suitable for film to be shrunk or molded, such as heat-shrinkable film. The heat-shrinkable polyester film produced from the copolymerized polyester raw material is inexpensive and has high productivity and shrinkage finish property. The package product of a container covered and fixed with the film as a label has excellent appearance.

**Claims**

1. A copolymerized polyester raw material for film **characterized by** satisfying the following requirements (1) to (5):

    (1) the copolymerized polyester raw material comprises 5 mol% or more and 40 mol% or less of constituent unit derived from diethylene glycol in 100 mol% of total glycol component amount in whole polyester resin component;
    (2) the copolymerized polyester raw material comprises 0 mol% or more and 5 mol% or less of constituent unit derived from a monomer component which can become an amorphous component in whole polyester resin component;
    (3) the copolymerized polyester raw material has a glass transition temperature of 73°C or lower;
    (4) the copolymerized polyester raw material has an intrinsic viscosity of 0.60 dl/g or more and 0.85 dl/g or less; and
    (5) the copolymerized polyester raw material has a melt viscosity of 200 Pa·S or less in a measurement at 255°C and shear rate of 6080 /S.

2. The copolymerized polyester raw material for film according to claim 1, wherein the copolymerized polyester raw material comprises an acid component consisting of terephthalic acid and a glycol component consisting of ethylene glycol and diethylene glycol in the whole polyester resin component.

3. A heat-shrinkable polyester film comprising the copolymerized polyester raw material according to claim 1 or 2, wherein the film satisfies the following requirements (6) to (10):

    (6) the film has a hot-water heat shrinkage ratio in a main-shrinking direction of the film of 40% or more and 85% or less by immersion in hot water of 98°C for 10 seconds;
    (7) the film has a hot-water heat shrinkage ratio in a direction orthogonal to the main-shrinking direction of the film of -5% or more and 15% or less by immersion in hot water of 98°C for 10 seconds;
    (8) the film has a hot-water heat shrinkage ratio in a direction orthogonal to the main-shrinking direction of the film of -5% or more and 5% or less by immersion in hot water of 70°C for 10 seconds;
    (9) the film has an intrinsic viscosity of 0.57 dl/g or more and 0.82 dl/g or less; and
    (10) the film has an average defects number of 1.1 or less per a film of 100 $m^2$ with a defect size of 1 mm or more in a longitudinal direction of the film or a width direction of the film.

4. A heat-shrinkable label, comprising the heat-shrinkable polyester film according to claim 3.

5. A package product, **characterized in that** the package product is produced by covering at least a part of periphery of an object for packaging with the heat-shrinkable label according to claim 4, and followed by subjecting to a heat-shrinking treatment.

## INTERNATIONAL SEARCH REPORT

| International application No. |
| --- |
| PCT/JP2021/017726 |

**A.   CLASSIFICATION OF SUBJECT MATTER**
B65D 77/20(2006.01)i; G09F 3/04(2006.01)i; C08J 5/18(2006.01)i; C08G 63/672(2006.01)i
FI: C08G63/672; B65D77/20 S; G09F3/04 C; C08J5/18 CFD
According to International Patent Classification (IPC) or to both national classification and IPC

**B.   FIELDS SEARCHED**

Minimum documentation searched (classification system followed by classification symbols)
B65D77/20; G09F3/04; C08J5/18; C08G63/672

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| X | JP 63-309424 A (DIAFOIL CO., LTD.) 16 December 1988 (1988-12-16) claims, page 1, lower left column, line 18 to page 2, upper left column, line 9, page 2, lower left column, line 13 to lower right column, line 11, page 3, upper left column, line 13 to upper right column, line 17, page 5, upper left column, line 4 to page 7, lower left column, line 4 | 1–5 |
| X | JP 2018-122438 A (TORAY INDUSTRIES, INC.) 09 August 2018 (2018-08-09) paragraph [0099] | 1–2 |
| X | JP 9-309147 A (TORAY INDUSTRIES, INC.) 02 December 1997 (1997-12-02) paragraph [0064], table 2, example 4 | 1–2 |

☒  Further documents are listed in the continuation of Box C.   ☒  See patent family annex.

| | |
| --- | --- |
| *   Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 05 July 2021 (05.07.2021) | 13 July 2021 (13.07.2021) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2021/017726 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 5-138737 A (C.I.KASEI CO., LTD.) 08 June 1993 (1993-06-08) paragraphs [0037]-[0041], tables 1-2 | 1-2 |
| A | JP 4-278330 A (SEKISUI CHEMICAL CO., LTD.) 02 October 1992 (1992-10-02) entire text | 1-5 |
| A | WO 2020/067535 A1 (TEIJIN LTD.) 02 April 2020 (2020-04-02) entire text | 1-5 |
| A | JP 4-268338 A (MITSUBISHI RAYON CO., LTD.) 24 September 1992 (1992-09-24) entire text | 1-5 |
| A | JP 5-138731 A (GUNZE LIMITED) 08 June 1993 (1993-06-08) entire text | 1-5 |

Form PCT/ISA/210 (continuation of second sheet) (January 2015)

**INTERNATIONAL SEARCH REPORT**

| International application No. |
|---|
| PCT/JP2021/017726 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
 See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

Information on patent family members

| International application No. |
| --- |
| PCT/JP2021/017726 |

| Patent Documents referred in the Report | Publication Date | Patent Family | Publication Date |
| --- | --- | --- | --- |
| JP 63-309424 A | 16 Dec. 1988 | US 4983653 A<br>claims, column 1, lines 16-46, column 2, lines 25-48, column 4, lines 36-66, column 6, line 36 to column 9, line 15<br>EP 267799 A2 | |
| JP 2018-122438 A | 09 Aug. 2018 | (Family: none) | |
| JP 9-309147 A | 02 Dec. 1997 | US 6610378 B1<br>no relevant examples<br>EP 767049 A2<br>CN 1158781 A | |
| JP 5-138737 A | 08 Jun. 1993 | (Family: none) | |
| JP 4-278330 A | 02 Oct. 1992 | (Family: none) | |
| WO 2020/06735 A1 | 02 Apr. 2020 | (Family: none) | |
| JP 4-268338 A | 24 Sep. 1992 | (Family: none) | |
| JP 5-138731 A | 08 Jun. 1993 | (Family: none) | |

Form PCT/ISA/210 (patent family annex) (January 2015)

**INTERNATIONAL SEARCH REPORT**

| International application No. |
| --- |
| PCT/JP2021/017726 |

```
<Continuation of Box No. III>

(Invention 1) Claims 1-2
     Claims 1-2 of the present application set forth a copolyester raw
material for film used for preparing a film satisfying specific requirements
(1)-(5), and thus the invention in claims 1-2 is classified as invention 1.

(Invention 2) Claims 3-5
     It is considered that the invention in claims 3-5 of the present
application referring to claims 1-2 of the present application and the
invention in claim 1 of the present application share the common technical
feature of a copolyester raw material for film used for preparing a film
satisfying requirements (1)-(5) specified in claim 1 of the present
application.
     However, said technical feature cannot be considered a special
technical feature in light of the disclosures of documents 1-4.
     In addition, there are no other identical or corresponding special
technical features between these inventions.
     Therefore, the invention in claims 3-5 of the present application is
classified as invention 2.
```

Form PCT/ISA/210 (extra sheet) (January 2015)

**REFERENCES CITED IN THE DESCRIPTION**

**Patent documents cited in the description**

- JP 4552097 B

- JP 6544492 B